# EUROPEAN PATENT SPECIFICATION

(11) **EP 0 609 150 B1**
(45) Date of publication and mention of the grant of the patent: **02.09.1998**
(21) Application number: 94400174.2
(22) Date of filing: 27.01.1994
(51) Int. Cl.: G11B 23/03

(54) **Method of manufacturing a shutter for a disc cartridge**
Herstellungsverfahren für den Verschluss einer Plattenkassette
Procédé de fabrication de dispositif d'obturation de cassette de disque

(30) Priority: 29.01.1993 JP 13976/93
(43) Date of publication of application: 03.08.1994
(73) Proprietor: SONY CORPORATION, Tokyo (JP)
(72) Inventor: Funawatari, Takatsugu, c/o Sony Corporation, Tokyo (JP); Kobayashi, Daiki, c/o Sony Corporation, Tokyo (JP); Taguchi, Takashi, c/o Kato Spring Works Co., Ltd., Tokyo (JP)
(74) Representative: Thévenet, Jean-Bruno

(56) References cited:
- EP-A- 0 353 000
- EP-A- 0 390 475
- EP-A- 0 524 824
- GB-A- 2 233 810
- US-A- 5 036 421
- US-A- 5 233 494
- PATENT ABSTRACTS OF JAPAN vol. 8, no. 265 (P-318) (1702) 5 December 1984 & JP-A-59 132 470 (SUMITOMO) 30 July 1984

## Description

### BACKGROUND

### 1. Field of the Invention

The present invention relates to a method of manufacturing a shutter. More particularly, the present invention relates to a method of manufacturing a shutter for a disc cartridge in which a recording medium is accommodated.

### 2. Background of the Invention

It is customary that disk-shaped recording media, such as magnetic disks and optical discs, are accommodated in disc cartridges in order to prevent recording media from being smudged and damaged. Disc cartridges each include a cartridge body in which a recording medium is accommodated and a shutter attached to the cartridge body. Openings are formed respectively through the front and rear surfaces of the cartridge body so that data can be recorded on and/or reproduced from the recording medium by a head assembly. These openings are opened and closed by the shutter concurrently with the loading operation or eject operation of the disc cartridge on or from a recording and/or reproducing apparatus. The shutter is formed as substantially U-letter shape in cross section by a metal material or synthetic resin material. The shutter is attached to the cartridge body along its one side surface so as to stride the cartridge body and so as to become freely movable therealong. When the disc cartridge is not in use, the above openings are closed by the shutter so that the recording medium can be prevented from being smudged and damaged.

Most of the shutters are generally made by a metal material, such as a stainless steel or the like, from a strength standpoint. As a manufacturing method in that case, there is proposed such one that a shutter is obtained in a developed state by punching out a plate-shaped metal material, and the punched-out member is shaped in substantially U-letter configuration in cross section by one bending work. The shutter thus obtained includes a pair of plate-shaped portions which open and/or close the openings of the above-mentioned cartridge body. EP A 343844, for example, will be referred to in order to understand the above-mentioned shutter structure and the manufacturing method thereof more fully.

A residual stress produced after the product was made is left in the shutter shaped in substantially U-letter configuration in cross section by one bending process so that the spacing between the free end sides of a pair of plate-shaped portions is urged to be increased. Therefore, a spacing between the free end sides of the shutter tends to be increased when an aging change occurs at a normal temperature or under an ambient temperature. As a result, it is frequently observed that the two plate-shaped portions of the shutter are projected from the surface of the front and rear surfaces of a cartridge body. Furthermore, even if a disc cartridge is dropped at the position of about one meter high, then the spacing between the free ends of the two plate-shaped portions of the shutter is increased considerably. Accordingly, when a disc cartridge is ejected from a recording and/or reproducing apparatus, the shutter is caught by members disposed within the recording and/or reproducing apparatus so that the disc cartridge cannot be ejected or a trouble occurs in the recording and/or reproducing apparatus.

US-A-5 036 421, on which the preamble of claim 1 is based, discloses, in order to prevent a distal opening of a shutter from being enlarged during fitting on the cartridge or due to dropping of the cartridge, a shutter having a distal opening being formed into a reduced width in advance.

For such a shutter, EP-A-0 390 475 discloses, during assembly, the use of an opening jig which opens the end of the shutter until the shutter is fitted to the cartridge case.

### SUMMARY OF THE INVENTION

It is an object of the present invention to provide a method of manufacturing a shutter in which the aforesaid shortcomings and disadvantages encountered with the related art can be eliminated.

According to the present invention, there is provided a manufacturing method of a shutter for a cartridge which is accommodating therein a recording medium. This manufacturing method includes the steps of a first process for punching out a plate-shaped metal material so as to provide a shutter of a developed shape having a pair of plate-shaped portions and a coupling portion for coupling the pair of plate-shaped portions, a second process for shaping the member shaped by the first process such that the pair of plate-shaped portions are opposed to each other across the coupling portion and that a spacing between free end sides of the pair of plate-shaped portions is made narrower than a spacing between the pairs of plate-shaped portions at the portions coupled by the coupling member, and a third process for shaping the member such that a spacing between free ends of the pair of plate-shaped portions of the member shaped by the second process becomes substantially equal to a spacing of the pair of plate-shaped portions at the portions coupled by the coupling member.

Although the shutter that was manufactured by the manufacturing method of the present invention is shaped in substantially U-letter configuration in cross section, even when the shutter is subject to an aging change or shocked when it is dropped, the spacing between the pair of plate-shaped portions at the free end portions thereof can be suppressed from being increased. As a result, the shutter manufactured by the present invention can be prevented from being projected from the surface of the disc cartridge body. Therefore, when it is loaded onto or ejected from the recording and/or reproducing apparatus, there is then no risk that the loading operation or eject operation can be prevented from being troubled.

### BRIEF DESCRIPTION OF THE DRAWINGS

The invention will be more readily understood with reference to the accompanying drawings, in which:

FIGURE 1A is a perspective view of a disc cartridge to which a shutter manufactured by a method of the present invention is attached, and illustrating the disc cartridge from above.

FIGURE 1B is a perspective view of the same disc cartridge shown in FIGURE 1A, and illustrating such disc cartridge from below.

FIGURES 2A through 2F are respectively schematic diagrams showing processes of the manufacturing method of a shutter according to a first embodiment of the present invention, wherein:

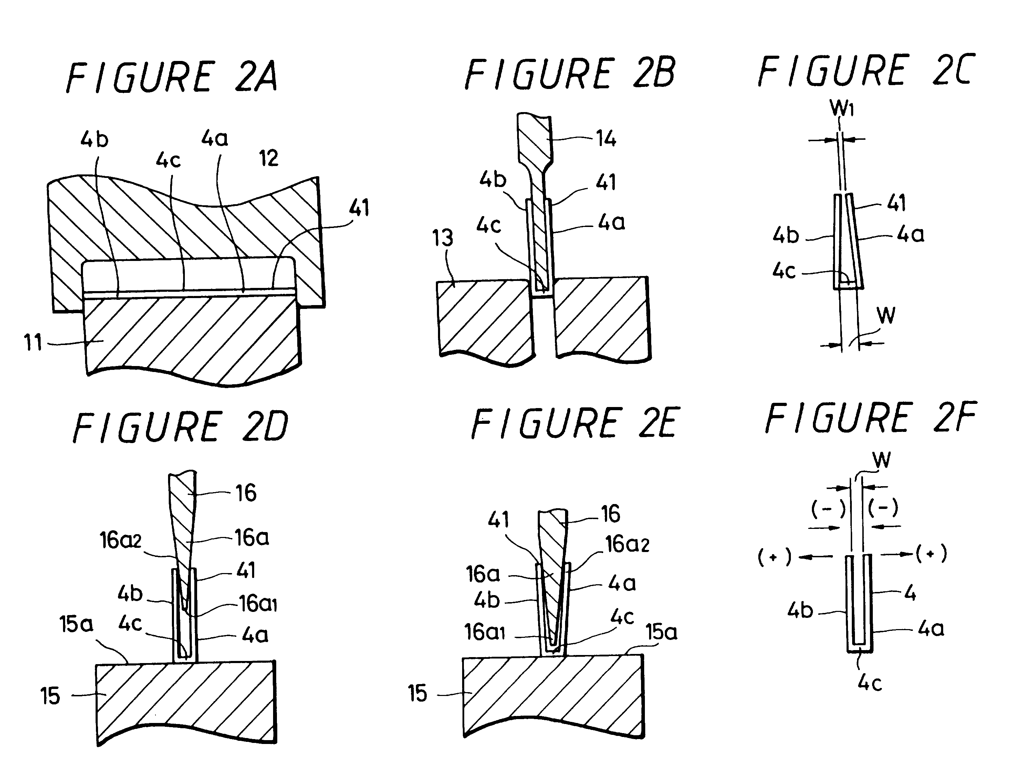

FIGURE 2A is a diagram used to explain a punch-out process for punching out a metal plate in a development fashion;
FIGURES 2B and 2C are respectively diagrams used to explain a bending process;
FIGURES 2D and 2E are diagrams used to explain a shaping process carried out after the bending process had been made; and
FIGURE 2F is a diagram showing a cross section of a shutter obtained as a product.

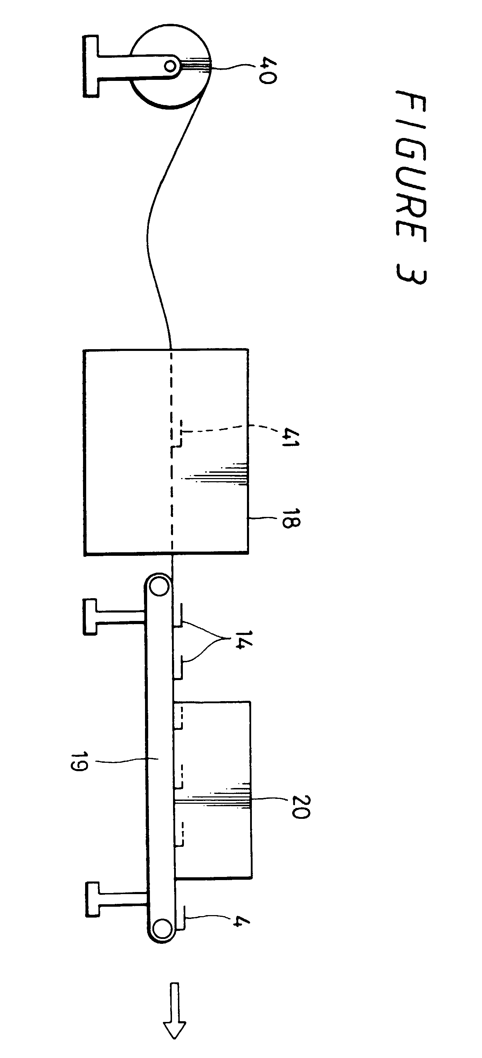

FIGURE 3 is a conceptual diagram showing a shutter manufacturing system to which the manufacturing method of the present invention is applied.

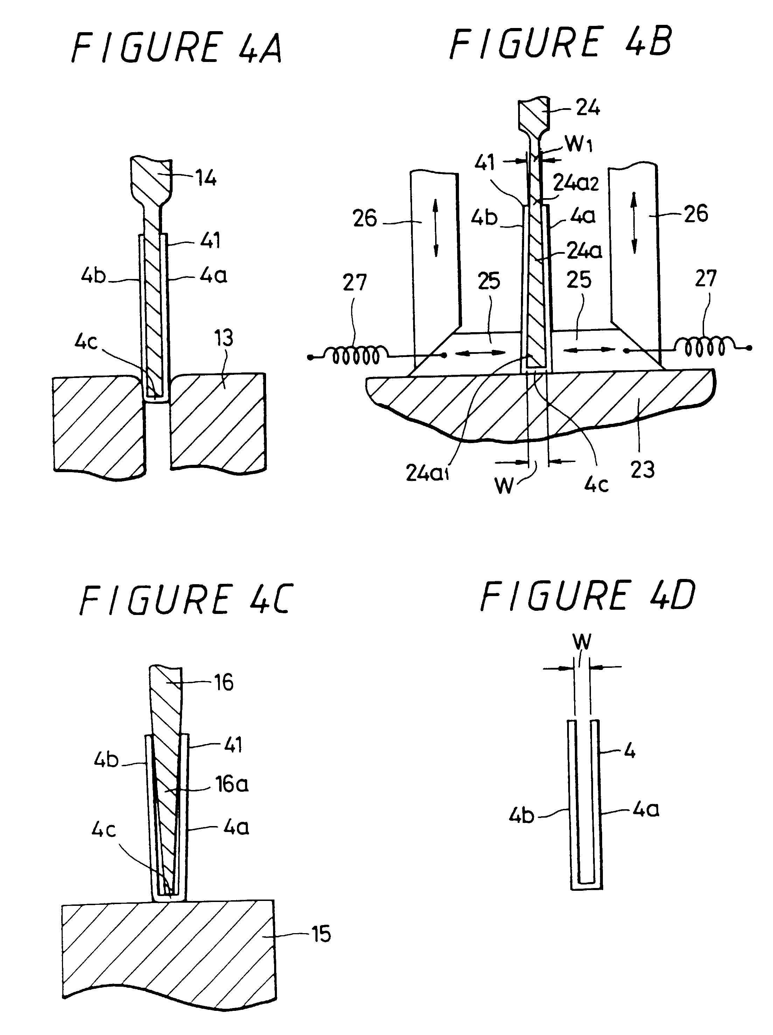

FIGURES 4A through 4D are respectively diagrams showing processes of a method of manufacturing a shutter according to a second embodiment of the present invention, in which:
FIGURE 4A is a diagram used to explain a bending process;
FIGURES 4B and 4C are diagrams used to explain a shaping process executed after the bending process had been completed; and
FIGURE 4D is a diagram showing a cross section of a shutter obtained as a final product.

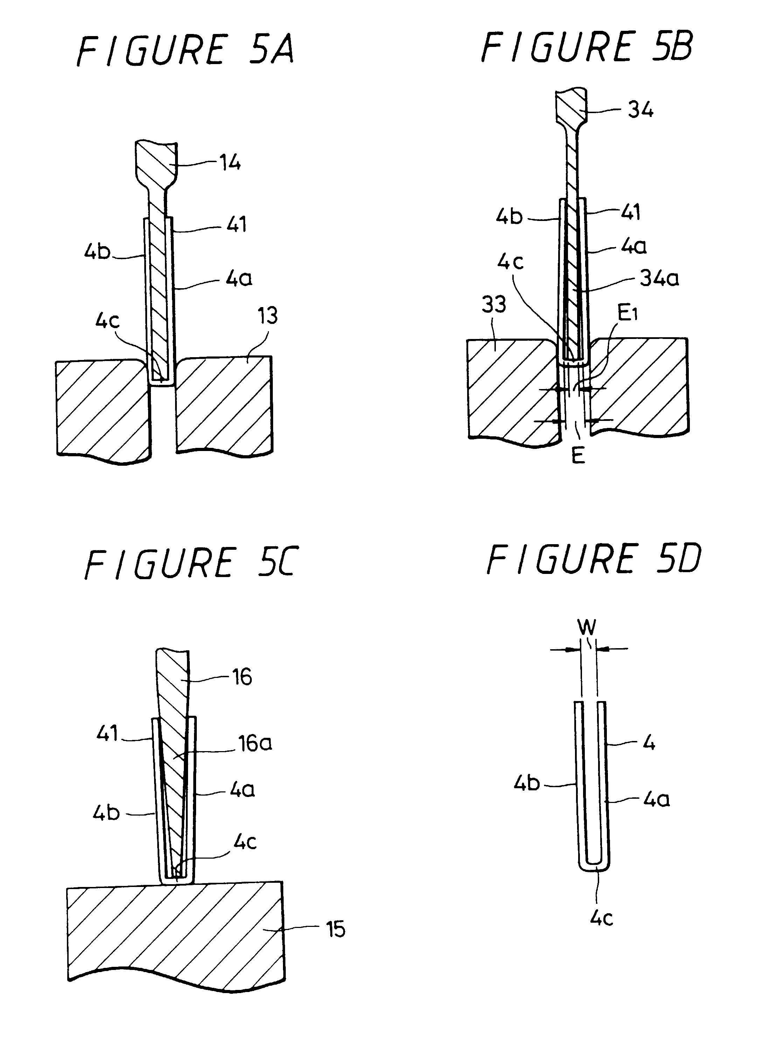

FIGURES 5A through 5D are respectively diagrams showing processes of a method of manufacturing a shutter according to a third embodiment of the present invention, in which:
FIGURE 5A is a diagram used to explain a bending process;
FIGURES 5B and 5C are respectively diagrams used to explain a shaping process executed after the bending process had been completed; and
FIGURE 5D is a diagram showing a cross section of a shutter obtained as a final product.

### DESCRIPTION OF THE INVENTION

A method of manufacturing a shutter according to the present invention will hereinafter be described with reference to the drawings.

In the embodiments which follow, the present invention will be described with reference to a shutter of a disc cartridge in which a magneto-optical disc is accommodated as a disk shaped recording medium, by way of example.

Initially, an example of a disc cartridge to which a shutter manufactured according to the present invention is attached will be described hereinafter.

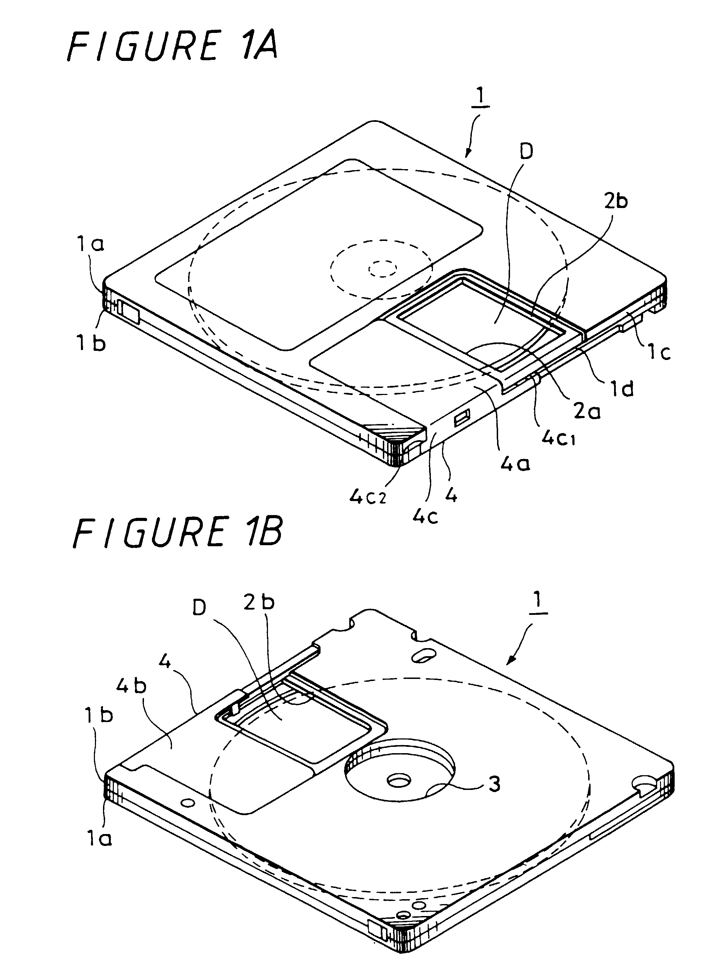

FIGURE 1A shows a front surface side of a disc cartridge and FIGURE 1B shows a rear surface side thereof.

As shown in FIGURES 1A and 1B, there is provided a cartridge body 1 in which a magneto-optical disc D is accommodated. The cartridge body 1 is formed by combining an upper half 1a and a lower half 1b. The two halves 1a and 1b have opposing openings 2a, 2b through which the magneto-optical disc D accommodated therein is partly exposed in its radius direction. The lower half 1b has at its central portion a chucking central aperture 3 into which a disc rotation driving mechanism is inserted.

The cartridge body 1 includes a shutter member 4 attached thereto so as to become freely slidable to open and/or close the two openings 2a, 2b. The shutter 4 includes plate-shaped portions 4a, 4b corresponding to the openings 2a, 2b of the cartridge body 1 and a coupling portion 4c for coupling the plate-shaped portions 4a, 4b and whose width is substantially equal to a thickness of the cartridge body 1. The whole of the shutter 4 is substantially U-letter in cross section.

The shutter 4 is attached to the cartridge body 1 from its front end face 1c at the side so as to stride the cartridge body 1 where the openings 2a, 2b are formed. At that time, engagement protrusions 4c1, 4c2 formed on the coupling portion 4c of the shutter 4 are engaged with a guide groove 1d formed on the front end face 1c of the cartridge body 1 along its longitudinal direction. As a result, the shutter 4 opens or closes the openings 2a, 2b when it is slid.

A manufacturing process of the shutter 4 thus arranged according to a first embodiment of the present invention will hereinafter be described with reference to FIGURES 2A through 2F.

Initially, as shown in FIGURE 2A, in the first process, the shutter 4 is formed by a material 41 of a development-shape. More specifically, a pair of plate-shaped portions 4a, 4b and the coupling portion 4c are punched out from a plate-shaped metal material by a punch die 11 and a punch 12 so that the plate-shaped portions 4a, 4b and the coupling portion 4c are in flush with one another and coupled to one another, thereby the material 41 of the shutter 4 being formed.

In the second process, as shown in FIGURE 2B, the material 41 of the shutter member 4 of the development shape (hereinafter simply referred to as "material" 41) is bent by a bending die 13 and a bending punch 14 such that the two plate portions 4a, 4b thereof are opposed substantially in parallel to each other across the coupling portion 4c. By the second process, the material 41 is formed as substantially U-letter configuration in cross section.

In the third process, as shown in FIGURE 2C, the two plate-shaped portions 4a, 4b of the material 41 that was formed as substantially U-letter configuration in cross section are bent such that a spacing between the free ends of the two plate-shaped portions 4a, 4b becomes narrower than the width of the coupling portion 4c. More specifically, as shown in FIGURE 2C, the two plate-shaped portions 4a, 4b are bent inwardly so that the opening width dimension W1 between the free end sides of the material 41 becomes narrower than an opening width dimension W of the shutter 4 that is the final product (W > W1).

In the fourth process, as shown in FIGURES 2D and 2E, the material 41 that was shaped in substantially U-letter in cross section is again shaped in substantially U-letter in cross section by a setting die 15 and a setting punch 16.

The setting die 15 used in the fourth process has a flat supporting surface 15a. A tip end portion 16a of the setting punch 16 is formed as a tapered surface in such a fashion that a thickness dimension of a tip end 16a1 thereof becomes smaller than the above-mentioned opening width dimension W1 between the two plate-shaped portions 4a, 4b of the material 41 having the deformed U-letter cross section and that a thickness dimension of a base portion 16a2 thereof is larger than the above-mentioned opening width dimension W of the shutter 4 that is the final product.

On the flat supporting surface 15a of the setting die 15 thus formed is set the coupling portion 4c of the material 41 whose free end side spacing is reduced. Under this condition, as shown in FIGURE 2D, the tapered surface tip end portion 16a of the setting die 16 is inserted with a pressure into the space between a pair of plate-shaped portions 4a and 4b from the space between their free ends. Subsequently, as shown in FIGURE 2E, the tapered surface tip end portion 16a is further inserted between the two plate-shaped portions 4a and 4b with a pressure, whereby the spacing between the free end portions of the two plate-shaped portions 4a and 4b, i.e., the opening portion thereof is pushed outwardly by the base portion 16a2 of the tapered surface tip end portion 16a whose thickness dimension is larger than the opening width dimension W1. As a result, the two plate-shaped portions 4a, 4b are pushed outwardly relative to the coupling portion 4c and thereby bent slightly.

Thereafter, when the setting punch 16 is extracted between the two plate-shaped portions 4a, 4b of the material 41, the plate-shaped portions 4a, 4b are deformed by a flexibility of the material 41 so that the distance at the base end side serving as the coupling portion 4c and the spacing between the free end sides become equal to each other. More specifically, as shown in FIGURE 2F, there can be obtained the shutter 4 in which the spacing between the two plate shaped portions 4a and 4b becomes the aforementioned opening width dimension W therethrough as the final product.

According to a series of bending processes that had been described so far, a residual stress produced in the shutter 4 when a pair of plate-shaped portions 4a, 4b of the shutter 4 are bent is converted from the (+) side to the (-) side as shown in FIGURE 2E and then alleviated. Further, since the spacing between a pair of plate-shaped portions 4a, 4b of the shutter 4 is selected to be the opening width dimension W of the final product, the above-mentioned spacing is held at the stable width dimension having less residual stress, i.e, such spacing is stably held at the spacing substantially equal to the thickness of the cartridge body 1.

If the above-mentioned bending processes are repeatedly carried out a plurality of times, then a residual stress of the two plate-shaped portions 4a, 4b can be decreased considerably.

Then, the residual stress of the two plate-shaped portions 4a, 4b can be removed substantially completely by heat-treating the shutter 4 thus formed at an ambient temperature or a temperature near the upper limit of the ambient temperature, for example, nearly 100(øC). Thus, such spacing between the two plate-shaped portions 4a, 4b can be held more stably. A temperature in the heat treatment process is set to be a temperature slightly higher than 80(øC) because the upper limit of a temperature at which the magneto-optical disc D accommodated in a disc cartridge to which the shutter 4 manufactured according to the present invention is attached is preserved is 80(øC). In this case, however, the above-mentioned heat treatment temperature is not limited to substantially 100(øC) and a temperature ranging from 0(øC) to 100(øC) may be properly selected checking the upper limit temperature at which the magneto optical disc D can be preserved. In the heat treatment process, the shutter 4 is treated by heat in a furnace in which the shutter 4 is radiated with infrared rays.

FIGURE 3 is a conceptual diagram showing a system in which a series of the above mentioned processes can be carried out to manufacture the shutter 4.

As shown in FIGURE 3, a material plate, i.e., a plate-shaped metal material 40, such as a stainless steel, aluminum plate or the like wound on a bobbin 17 is transported to a press work machine 18. This press work machine 18 carries out the above-mentioned processes shown in FIGURES 2A to 2F, i.e., the first process in which the material 41 is punched out therefrom, the second process in which the material 41 is bent in substantially U-letter shape, the third process in which the two plate-shaped portions 4a, 4b are bent toward the inside and the fourth process in which the two plate-shaped portions 4a, 4b are slightly bent when they are pressed outwardly. Then, the aforesaid shutter 4 is shaped by this press work machine 18.

The shutter 4 thus shaped is transported on a belt conveyor 19 and then transported by the belt conveyor 19 to a heat treatment furnace 20, in which it is treated by heat at the aforesaid temperature to provide the shutter 4 as the final product.

FIGURES 4A to 4D show a second embodiment of the bending work process of the shutter 4. One of the most specific features of the second embodiment of the present invention lies in a bending work process in which the two plate-shaped portions 4a, 4b are bent inwardly. This bending work process according to the second embodiment corresponds to the third process in the bending work processes shown in FIGURES 2A to 2F.

As shown in FIGURE 4A, similarly to the second process shown in FIGURE 2A, the material 41 of the shutter 4 in the developed state is bent by the first bending die 13 and the first bending punch 14 in such a manner as to cause a pair of plate-shaped portions 4a, 4b to oppose to each other across the coupling portion 4c in substantially parallel to each other, and then shaped in substantially U-letter configuration.

The material 41 whose cross section is substantially U-letter configuration is processed by a second bending die 23 and a second bending punch 24 as shown in FIGURE 4B with the result that the pair of plate-shaped portions 4a, 4b are bent inwardly as shown in FIGURE 4B.

More specifically, as shown in FIGURE 4B, the second bending die 23 includes a slide die 25, a slide cam 26 for pressing the slide die 25 and a return spring 27 for the slide die 25. On the other hand, as shown in FIGURE 4B, the second bending punch 24 is formed as an inverse tapered surface such that a thickness dimension of a tip end 24a1 of a tip end portion 24a becomes equal to the opening width dimension W of the final product mentioned above and that a thickness dimension of a base portion 24a2 of the tip end portion 24a becomes the dimension W1 which is smaller than the opening width dimension W. The slide die 25 is urged against the base end side of the material 41 under the condition that the bending punch 24 is inserted from the free end sides of the pair of plate-shaped portions 4a, 4b of the material 41. Under this condition, when the slide cam 26 is moved downwardly, the slide die 25 is moved in the directions shown by arrows in FIGURE 4B with the result that the material 41 is shaped. After the material 41 has finished being shaped, the slide die 25 is spaced apart from the material 41 by the return springs 27 and the slide cam 26 also is moved upwardly. By the second bending die 23 and the second bending punch 24 thus arranged, the two plate-shaped portions 4a, 4b of the material 41 are inwardly bent such that a relationship between the base end side width dimension W thereof and the free end side width dimension W1 thereof satisfies W > W1 similarly to the case shown in FIGURE 2C. Therefore, the material 41 is shaped in substantially U-letter configuration in cross section.

As shown in FIGURE 4C, the material 41 whose cross section is substantially U-letter configuration is subjected to the setting work in which the two plate-shaped portions 4a, 4b are pressed outwardly and then set in the bent state by the setting die 15 and the setting punch 16 similarly to the aforesaid fourth process shown in FIGURES 2D and 2E. As a result, there is obtained the shutter 4 in which the whole spacing between the pair of plate-shaped portions 4a, 4b becomes the aforementioned opening width dimension W as a final product as shown in FIGURE 4D.

According to the second embodiment of the present invention, the two plate-shaped portions 4a, 4b can be bent inwardly relative to the coupling portion 4c equally and reliably.

FIGURES 5A through 5D show a third embodiment of the fourth bending work process according to the present invention. Also in the third embodiment, one of the most specific features thereof lies in that the bending work process for bending the two plate-shaped portions 4a, 4b inwardly. This bending work process corresponds to the third process in the bending work processes shown in FIGURES 2A through 2E.

Also in the third embodiment of the present invention, by the first bending die 13 and the first bending punch 14 shown in FIGURE 5A, similarly to the second process mentioned above, the two plate-shaped portions 4a, 4b are bent across the coupling portion 4c so as to oppose to each other in substantially parallel to each other, and the material 41 is shaped in substantially U-letter configuration in cross section.

The two plate-shaped portions 4a, 4b of the material 41 are bent inwardly by a second bending die 33 and a second bending punch 34 as shown in FIGURE 5B. In the second bending punch 34 used in this second bending process, a thickness dimension E1 of a tip end portion 34a thereof is set to be smaller than an inner width dimension E of the material 41 (E > E1) as shown in FIGURE 4B. When the material 41 which is shaped in substantially U-letter configuration in cross section is bent by the second bending punch 34 and the second bending die 33, the two plate-shaped portions 4a, 4b are bent inwardly in a range of a difference between the dimension E and the dimension E1 so that the material 41 is shaped in deformed U-letter configuration in cross section.

Then, the material 41 which was shaped in deformed U-letter configuration in cross section is treated by the setting work process by the setting die 15 and the setting punch 15 similarly to the aforesaid first and second embodiments as shown in FIGURE 5C. As a consequence, there is obtained the shutter 4 in which the whole spacing between the two plate-shaped portions 4a and 4b becomes the aforesaid opening width dimension W as shown in FIGURE 5D.

According to the third embodiment of the present invention, a mold structure used in the bending work process in which the two plate-shaped portions 4a, 4b are bend inwardly can be simplified.

According to the aforesaid second and third embodiments of the present invention, the residual stress can be removed substantially completely by treating the shutter 4 shaped as the final product by heat similarly to the first embodiment, and therefore the spacing between the two plate-shaped portions 4a and 4b can be held more stably.

While the present invention is applied to the manufacturing process for manufacturing the shutter of the disc cartridge in which the magneto-optical disc is accommodated as described above, the present invention is not limited thereto and may also be applied to shutters of substantially U-letter configuration in cross section that are attached to a variety of cartridges for accommodating therein recording media, such as a floppy disk or the like.

Furthermore, the shape or the like of the shutter is not limited to the above-mentioned one and may be properly varied freely.

Having described preferred embodiments of the invention with reference to the accompanying drawings, it is to be understood that the invention is not limited to those precise embodiments and that various changes and modifications could be effected therein by one skilled in the art without departing from the scope of the invention as defined in the appended claims.

## Claims

1. A manufacturing method of a shutter (4) for a cartridge (1) which is accommodating therein a recording medium, comprising the steps of:
a first process for punching out a plate-shaped metal material (41) so as to provide a shutter (4) in a developed shape having a pair of plate-shaped portions (4a,4b) and a coupling portion (4c) for coupling said pair of plate-shaped portions (4a,4b);
a second process for shaping the member (41) shaped by said first process such that said pair of plate-shaped portions (4a,4b) are opposed to each other across said coupling portion (42) and that a spacing (W₁) between free end sides of said pair of plate-shaped portions (4a,4b) becomes narrower than a spacing (W) of said pair of plate-shaped portions (4a,4b) at its portion coupled by said coupling portion (4c); characterized by
a third process for shaping said member (41) such that a spacing (W) between free ends of said pair of plate-shaped portions (4a,4b) of said member (41) shaped by said second process becomes substantially equal to a spacing (W) of said pair of plate-shaped portions (4a,4b) at its portion coupled by said coupling member (4c).

2. A manufacturing method according to claim 1, wherein said third process is a process in which the spacing between the free ends of said pair of plate-shaped portions (4a,4b) of said member (41) shaped by said second process is temporarily widened more that the spacing of the portions (4a,4b) coupled by said coupling portion (4c).

3. A manufacturing method according to claim 2, wherein said third process is carried out such that a mold (16) having such a shape that its thickness is reduced in its tip end portion (16a) and its portion corresponding to said free end sides of said pair of plate-shaped portions (4a,4b) is larger than the spacing of the portions coupled by said coupling member (4c) of said pair of plate-shaped portions (4a,4b) shaped by second process is inserted from said free end sides of said pair of plate-shaped portions (4a,4b) of said member (41) shaped by said second process.

4. A manufacturing method according to claim 1, wherein said second process is comprised of a process for shaping said member (41) obtained by said first process in substantially U-letter configuration in cross section such that said pair of plate-shaped portions (4a,4b) are opposed to each other across said coupling portion (42) and a process for shaping said member (41) shaped by the preceding process in substantially U-letter configuration in cross section such that a spacing (W₁) between the free end sides of said pair of plate-shaped portions (4a,4b) becomes narrower than a spacing (W) between said pair of plate-shaped portions (4a,4b) at its portions coupled by said coupling portion (4c).

5. A manufacturing method according to claim 4, wherein said process in said second process for reducing the spacing is carried out by inserting a mold (24), in which its portion (24a2) corresponding to said free end sides of said member (41) which is shaped in substantially U-letter configuration in cross section is made narrower than at least a spacing (W) between said pair of plate-shaped portions (4a,4b) of the portion coupled by said coupling portion (4c), thereinto from said free end sides of said pair of plate-shaped portions (4a,4b).

6. A manufacturing method according to claim 4, wherein said process in said second process for reducing the spacing is carried out by inserting a mold (34), in which a portion (34a) corresponding to said free end sides of said member (41) which is shaped in substantially U-letter configuration in cross section is made narrower than at least a spacing (E) between said pair of plate-shaped portions (4a,4b) of the portion coupled by said coupling portion (4c), thereinto from said free end sides of said pair of plate-shaped portions (4a,4b) and the portions coupled by said coupling portion (4c) of said pair of plate-shaped portions (4a,4b) of the member (41) shaped in U-letter configuration in cross section is shaped so as to reduce the spacing (E₁) between said free end sides under the condition that said mold (34) is inserted.

7. A manufacturing method according to claim 4, wherein said process in said second process for shaping said member (41) in U-letter configuration in cross section is carried out by using a mold (14), having a width substantially equal to that of said coupling portion (4c) and a mold (14) for shaping the member (41) obtained by said first process according to said mold (14).

8. A manufacturing method according to claim 1, wherein said method further comprises a process for treating said member (41) obtained by said third process by heat at a temperature in which a residual stress can be removed.

9. A manufacturing method according to claim 1, wherein said method further comprises a process for treating said member (41) obtained by said third process by heat at a temperature near an upper limit of an ambient temperature in which said member (41) is used as a shutter (4).

## Patentansprüche

1. Herstellungsverfahren eines Verschlusses (4) für eine Kassette (1), in welcher ein Aufzeichnungsträger untergebracht ist, welches die Schritte aufweist:
einen ersten Arbeitsvorgang zum Ausstanzen eines plattenförmigen Metalls (41), um einen Verschluß (4) in einer abgewickelten Form bereitzustellen, der ein plattenförmiges Teilepaar (4a, 4b) und ein Koppelteil (4c) hat, um das plattenförmige Teilepaar (4a, 4b) zu koppeln;
einen zweiten Arbeitsvorgang zum Formen des Teils (41), welches durch den ersten Arbeitsvorgang geformt wurde, so daß die Teile des plattenförmigen Paars (4a, 4b) zueinander über das Koppelteil (42) gegenüberliegend sind und daß ein Abstand (W₁) zwischen freien Endseiten des plattenförmigen Teilepaars (4a, 4b) enger wird als ein Abstand (W) des plattenförmigen Teilepaars (4a, 4b) an seinem Bereich, der durch das Koppelteil (4c9 gekoppelt ist;
**gekennzeichnet durch**
einen dritten Arbeitsvorgang zum Formen des Teils (41), so daß ein Abstand (W) zwischen freien Enden des plattenförmigen Teilepaars (4a, 4b) des Teils (41), das durch den zweiten Arbeitsvorgang geformt wurde, in etwa gleich einem Abstand (W) des plattenförmigen Teilepaars (4a, 4b) an seinem Bereich wird, der durch das Koppelteil (4c) gekoppelt ist.

2. Herstellungsverfahren nach Anspruch 1, wobei der dritte Arbeitsvorgang ein Arbeitsvorgang ist, bei dem der Abstand zwischen den freien Enden des plattenförmigen Teilepaars (4a, 4b) des Teils (41), welches durch den zweiten Arbeitsvorgang geformt wurde, vorübergehend mehr als der Abstand der Teile (4a, 4b), die durch das Koppelteil (4c) gekoppelt sind, aufgeweitet wird.

3. Herstellungsverfahren nach Anspruch 2, wobei der dritte Arbeitsvorgang so ausgeführt wird, daß eine Preßform (16), die eine Form hat, deren Dicke an ihrem Spitzenendteil (16a) reduziert ist, und ihr Bereich, der den freien Endseiten des plattenförmigen Teilepaars (4a, 4b) entspricht, größer ist als der Abstand der Teile, die durch das Koppelteil (4c) des plattenförmigen Teilepaars (4a, 4b) gekoppelt sind, die durch den zweiten Arbeitsvorgang geformt sind, von den freien Endseiten des plattenförmigen Teilepaars (4a, 4b) des Teils (41), welches durch den zweiten Arbeitsvorgang geformt ist, eingeführt wird.

4. Herstellungsverfahren nach Anspruch 1, wobei der zweite Arbeitsvorgang umfaßt:
einen Arbeitsvorgang, um das Teil (41), welches durch den ersten Arbeitsvorgang erhalten wird, zu einem in etwa U-förmigen Querschnitt zu formen, so daß die Teile des plattenförmigen Paars (4a, 4b) einander über das Koppelteil (42) gegenüberliegen,
und einen Arbeitsvorgang, um das Teil (41), welches durch den vorhergehenden Arbeitsvorgang geformt wurde, zu einem in etwa U-förmigen Querschnitt zu formen, so daß ein Abstand (W₁) zwischen den freien Endseiten des plattenförmigen Teilepaars (4a, 4b) enger wird als ein Abstand (W) zwischen dem plattenförmigen Teilepaar (4a, 4b) an seinem Bereich, der durch das Koppelteil (4c) gekoppelt ist.

5. Herstellungsverfahren nach Anspruch 4, wobei der Arbeitsvorgang beim zweiten Arbeitsvorgang zur Reduzierung des Abstandes ausgeführt wird, indem eine Preßform (24), bei welcher ihr Bereich (24a2), der den freien Endseiten des Teils (41) entspricht, welches zu einem in etwa U-förmigen Querschnitt geformt ist, enger ausgebildet ist als zumindest ein Abstand (W) zwischen den Teilen des plattenförmigen Paars (4a, 4b) des Bereichs, der durch das Koppelteil (4c) gekoppelt ist, von den freien Endseiten des plattenförmigen Teilepaars (4a, 4b) in dieses eingeführt wird.

6. Herstellungsverfahren nach Anspruch 4, wobei der Arbeitsvorgang beim zweiten Arbeitsvorgang zur Reduzierung des Abstandes ausgeführt wird, wobei eine Preßform (34), bei der ein Bereich (34a), der den freien Endseiten des Teils (41), welches zu einem in etwa U-förmigen Querschnitt geformt ist, enger ausgebildet ist als zumindest ein Abstand (E) zwischen den Teilen des plattenförmigen Paars (4a, 4b) des Bereichs, der durch das Koppelteil (4c) gekoppelt ist, in dieses von den freien Endseiten des plattenförmigen Teilepaars (4a, 4b) eingeführt wird, und die Teile, die durch das Koppelteil (4c) des plattenförmigen Teilepaars (4a, 4b) des Teils (41) gekoppelt sind, welches zu einem U-förmigen Querschnitt geformt ist, so geformt sind, um den Abstand (E₁) zwischen den freien Endseiten unter der Bedingung zu reduzieren, daß die Preßform (34) eingeführt ist.

7. Herstellungsverfahren nach Anspruch 4, wobei der Arbeitsvorgang beim zweiten Arbeitsvorgang zum Formen des Teils (41) zu einem U-förmigen Querschnitt ausgeführt wird, indem eine Preßform (14) verwendet wird, die eine Breite hat, die in etwa gleich der des Koppelteils (4c) ist, und eine Preßform (14), um das Teil (41), welches durch den ersten Arbeitsvorgang erhalten wird, entsprechend der Preßform (14) zu formen.

8. Herstellungsverfahren nach Anspruch 1, wobei das Verfahren außerdem einen Arbeitsvorgang umfaßt, um das Teil (41), welches durch den dritten Arbeitsvorgang erhalten wird, durch Wärme bei einer Temperatur zu behandeln, bei der eine Restspannung beseitigt werden kann.

9. Herstellungsverfahren nach Anspruch 1, wobei das Verfahren außerdem einen Arbeitsvorgang umfaßt, um das Teil (41), welches durch den dritten Arbeitsvorgang erhalten wird, durch Wärme bei einer Temperatur in der Nähe einer oberen Grenze einer Umgebungstemperatur, bei der das Teil (41) als ein Verschluß (4) verwendet wird, zu behandeln.

## Revendications

1. Procédé de fabrication d'un dispositif d'obturation (4) pour une cartouche (1) qui renferme un support d'enregistrement, comprenant les étapes de :
un premier processus de poinçonnage d'une matière métallique en forme de plaque (41) de façon à procurer un dispositif d'obturation (4) sous une forme développée ayant une paire de parties en forme de plaque (4a, 4b) et une partie de liaison (4c) destinée à relier les parties en forme de plaque (4a, 4b) de ladite paire ;
un deuxième processus de mise en forme de l'élément (41) mis en forme par ledit premier processus de telle sorte que lesdites parties en forme de plaque (4a, 4b) de la paire sont opposées l'une à l'autre par l'intermédiaire de ladite partie de liaison (42) et qu'un espacement (W1) entre les côtés d'extrémité libre de ladite paire de parties en forme de plaque (4a, 4b) est rendu plus étroit qu'un espacement (W) entre les parties en forme de plaque (4a, 4b) de ladite paire au niveau de sa partie reliée par ladite partie de liaison (4c) ; caractérisé par
un troisième processus de mise en forme dudit élément (41) de telle sorte qu'un espacement (W) entre les extrémités libres de ladite paire de parties en forme de plaque (4a, 4b) dudit élément (41) mis en forme par ledit deuxième processus devient sensiblement égal à un espacement (W) de ladite paire de parties en forme de plaque (4a, 4b) au niveau de sa partie reliée par ledit élément de liaison (4c).

2. Procédé de fabrication selon la revendication 1, dans lequel ledit troisième processus est un processus dans lequel l'espacement entre les extrémités libres de ladite paire de parties en forme de plaque (4a, 4b) dudit élément (41) mise en forme par ledit deuxième processus est temporairement agrandi davantage que l'espacement des parties (4a, 4b) reliés par ladite partie de liaison (4c).

3. Procédé de fabrication selon la revendication 2, dans lequel ledit troisième processus est réalisé de telle sorte qu'un moule (16) ayant une forme telle que son épaisseur est réduite dans sa partie d'extrémité terminale (16a) et sa partie correspondant aux dits côtés d'extrémité libre de ladite paire de parties en forme de plaque (4a, 4b) est plus grande que l'espacement des parties reliées par ledit élément de liaison (4c) de ladite paire de parties en forme de plaque (4a, 4b) mises en forme par le deuxième processus est inséré depuis lesdits côtés d'extrémité libre de ladite paire de parties en forme de plaque (4a, 4b) dudit élément (41) mis en forme par ledit deuxième processus.

4. Procédé de fabrication selon la revendication 1, dans lequel ledit deuxième processus se compose d'un processus de mise en forme dudit élément (41) obtenu par ledit premier processus avec une configuration sensiblement en U en coupe de telle sorte que les parties en forme de plaque (4a, 4b) de ladite paire se font face par l'intermédiaire de ladite partie de liaison (42) et un processus de mise en forme dudit élément (41) mis en forme par le processus précédent avec une configuration en coupe sensiblement en U de telle sorte qu'un espacement (W1) entre les côtés d'extrémité libre de ladite paire de parties en forme de plaque (4a, 4b) devient plus faible qu'un espacement (W) entre ladite paire de parties en forme de plaque (4a, 4b) au niveau de ses parties reliées par ladite partie de liaison (4c).

5. Procédé de fabrication selon la revendication 4, dans lequel ledit processus dans ledit deuxième processus de réduction de l'espacement est réalisé en insérant un moule (24), dans lequel sa partie (24a2) correspondant aux dits côtés d'extrémité libre dudit élément (41) qui est mis avec une configuration en coupe sensiblement en U est rendue plus étroite qu'au moins un espacement (W) entre ladite paire de parties en forme de plaque (4a, 4b) de la partie reliée par ladite partie de liaison (4c), depuis lesdits côtés d'extrémité libre de ladite paire de parties en forme de plaque (4a, 4b).

6. Procédé de fabrication selon la revendication 4, dans lequel ledit processus dans ledit deuxième processus de réduction de l'espacement est réalisé en insérant un moule (34), dans lequel une partie (34a) correspondant aux dits côtés d'extrémité libre dudit élément (41) qui est mis en forme avec une configuration en coupe sensiblement en U est rendue plus étroite qu'au moins un espacement (E) entre ladite paire de parties en forme de plaque (4a, 4b) de la partie reliée par ladite partie de liaison (4c), depuis lesdits côtés d'extrémité libre de ladite paire de parties en forme de plaque (4a, 4b) et les parties reliées par ladite partie de liaison (4c) de ladite paire de parties en forme de plaque (4a, 4b) de l'élément (41) mis en forme avec une configuration en coupe en U sont mises en forme de façon à réduire l'espacement (E1) entre lesdits côtés d'extrémité libre dans la condition où ledit moule (34) est inséré.

7. Procédé de fabrication selon la revendication 4, dans lequel lesdits processus dans ledit deuxième processus de mise en forme dudit élément (41) avec une configuration en coupe en U est réalisé en utilisant un moule (14), ayant une largeur sensiblement égale à celle de ladite partie de liaison (4c) et un moule (14) destiné à mettre en forme l'élément (41) obtenu par ledit premier processus selon ledit moule (14).

8. Procédé de fabrication selon la revendication 1, dans lequel ledit procédé comporte en outre un processus de traitement thermique dudit élément (41) obtenu par ledit troisième processus à une température dans laquelle une contrainte résiduelle peut être supprimée.

9. Procédé de fabrication selon la revendication 1, dans lequel ledit procédé comporte en outre un processus du traitement thermique dudit élément (41) obtenu par ledit troisième processus à une température proche d'une limite supérieure d'une température ambiante dans laquelle ledit élément (41) est utilisé en tant que dispositif d'obturation (4).
